# EUROPÄISCHE PATENTANMELDUNG

(11) **EP 2 669 483 A2**
(43) Veröffentlichungstag der Anmeldung: **04.12.2013**
(21) Anmeldenummer: 13169408.5
(22) Anmeldetag: 28.05.2013
(51) Int. Cl.: F01M 1/02, F01M 1/16

(54) **Vorrichtung und Verfahren zum Betreiben eines Fördersystems zur Förderung eines Schmierstoffes**

(30) Priorität: 30.05.2012 DE 102012209120
(71) Anmelder: SKF Lubrication Systems Germany AG, 12277 Berlin (DE)
(72) Erfinder: Stockhammer, Raimund, 12205 Berlin (DE)
(74) Vertreter: Schonecke, Mitja

(57) **Zusammenfassung**

Eine Vorrichtung (4) zum Betreiben eines Fördersystems (2) zur Förderung eines Schmierstoffes, umfasst eine Sensorschnittstelle (16) zum Empfangen eines Informationssignales, das eine Information über eine Umgebungstemperatur in einer Umgebung des Fördersystems (2) enthält und eine Steuerschnittstelle (20) zum Ausgeben eines Steuersignales für das Fördersystem (2), das eine von dem Informationssignal abhängige Veränderung einer Fördercharakteristik des Fördersystems (2) bewirkt, wobei das Steuersignal eine Verringerung einer Anzahl von Pumpenhüben der Pumpe (8) bewirkt, wenn die Information über die Umgebungstemperatur eine Verringerung der Umgebungstemperatur anzeigt.

## Beschreibung

Ausführungsbeispiele der vorliegenden Erfindung befassen sich mit einer Vorrichtung und einem Verfahren zum Betreiben eines Fördersystems zur Förderung eines Schmierstoffes.

Anwendungen, bei denen ein oder mehrere mechanische Komponenten oder Maschinen gleichzeitig mit einem Schmierstoff geschmiert werden sollen, sind vielfältig. Bei Systemen, bei denen ein Schmierstoff aus einem zentralen Schmierstoffreservoir an die Abnehmer verteilt wird, kann zwischen Verbrauchsschmierungen und Umlaufschmierungen unterschieden werden. Bei der Verbrauchsschmierung wird der verwendete Schmierstoff einmal dem zu schmierenden Gegenstand zugeführt und dort verbraucht bzw. nach dessen Gebrauch entsorgt. Bei den Umlaufschmierungen befindet sich ein Schmierstoff in einem geschlossenen Schmierstoffkreislauf und wird, möglicherweise nach einer Wiederaufbereitung, einem zu schmierenden Gegenstand mehrfach in dem Kreislauf zugeführt.

Um den Schmierstoff aus dem zentralen Reservoir an die einzelnen Schmierstoffverteiler, die den Schmierstoff am Verteilerausgang zur Schmierstelle leiten, über eine sogenannte Hauptleitung zu fördern, werden unterschiedliche Pumpensysteme verwendet, darunter Mehrkreispumpen, Einkreispumpen oder Kolbenpumpen.

Bei der Planung eines Fördersystems zur Förderung eines Schmierstoffes bzw. bei der Planung des zentralen Schmiersystems wird bislang die ungünstigste im realen Betrieb zu erwartende Konstellation der relevanten Funktions- und Umgebungsparameter zugrunde gelegt. Werden beispielsweise viskose fluide Medien wie Fette oder dergleichen als Schmierstoff verwendet, wird der Auslegung üblicherweise die im normalen Betrieb zu erwartende Minimaltemperatur zugrunde gelegt, da bei dieser Temperatur die Förderbarkeit des Schmierstoffes am schlechtesten ist. Das heißt, sich abhängig von den Umgebungsbedingungen verändernde Fließeigenschaften der zu fördernden Medien bzw. Schmierstoffe werden nicht berücksichtigt. Dies wiederum führt während der überwiegenden Betriebsdauer zu einer Fehlanpassung der Funktionalität bzw. des Fördersystems. Beispielsweise wird, wenn bei der Auslegung der Pumpenlaufzeit bzw. der Fördermenge der ungünstigste Fall angenommen wird, bei normalen Betriebbedingungen zu viel Schmierstoff gefördert, was für die angeschlossenen Lager und Schmierstellen zu einer Überschmierung führt, die die Lebensdauer eines solchen Lagers bzw. Systems vermindert. Eine übermäßige Schmierung, also das Vorhandensein von zu viel Schmierstoff, hat nämlich aufgrund der zunehmenden Walgarbeit beispielsweise eine Temperaturerhöhung im Lager zur Folge. Neben der zu erwartenden Lebensdauerverkürzung führt eine solche Überschmierung selbstverständlich auch zu unnötig hohen Kosten für den Schmierstoff sowie bei Verbrauchsschmieranlagen auch zu ökologisch und ökonomisch wenig sinnvollen Konstellationen, da mehr Schmierstoff verbraucht wird als eigentlich erforderlich wäre.

Ein nicht auf den ungünstigsten Fall ausgelegtes Fördersystem kann ebenfalls zu einer Verringerung der Lebensdauer der geschmierten Komponenten führen. Das Fördervolumen der zur Förderung häufig verwendeten Pumpen oder Pumpenaggregate wird überwiegend durch die geometrischen Parameter, beispielsweise die Form der Förderkammer, die Anzahl der Förderkammer und die Zeit bestimmt, die die Pumpe für einen vollständigen Förderhub bzw. für einen Förderhub mit dazwischen liegender Ruhezeit benötigt. In der Ruhezeit, in der kein aktiver Förderhub stattfindet, muss nämlich die Förderkammer vollständig mit Schmierstoff gefüllt werden, weswegen diese üblicherweise über eine Saugbohrung mit einem Reservoir für den Schmierstoff verbunden ist. Das Füllen der Förderkammer ist unter Anderem abhängig von der Viskosität des Schmierstoffes, die wiederum von der Temperatur oder anderen Umgebungsparametern abhängig sein kann. Neben den geometrischen Parametern ist die zum Füllen des Saugraumes zur Verfügung stehende Zeit natürlich auch abhängig von der Hubfrequenz oder der Rotations- und Kammernzahl, mit der die Pumpe betrieben wird. Ändert sich die Betriebsbedingung beispielsweise zu einer sehr niedrigen Umgebungstemperatur, kann es daher bei einer statischen Auslegung zu unterschiedlichen Füllgraden der Förderkammern kommen, das heißt, die zur Verfügung stehende Zeit zur Wiederbefüllung kann bei gegebener Viskosität nicht ausreichend sein, um die Förderkammer vollständig zu füllen. Dies führt zu Fördermengenschwankungen.

Der Füllgrad der Förderkammer wäre dann geringer als der bei der Auslegung des Fördersystems zugrunde gelegte Anteil (100 %). Liegt dieser bei ungünstigen Betriebsbedingungen unterhalb von 100 % des angestrebten Wertes, kann dies beispielsweise zu einer Unterversorgung der Lagerstellen führen, was Reibstellen zur Folge hat. Eine Änderung des Zustands des Schmierstoffes im Betrieb, die beispielsweise durch den Einfluss der Umgebungstemperatur bedingt sein kann, kann somit zu einer Änderung der Viskosität des Schmierstoffes und daraus folgend zu einer Unterversorgung der Lagerstellen führen, was zu einer Reduzierung der Lebensdauer der geschmierten Komponenten führt.

Das Deutsche Gebrauchsmuster DE 20 2010 016 721 U1 schlägt vor, dass eine Schmierstoffpumpe zusätzlich wenigstens ein Heizelement aufweist, das über die Steuerungseinheit, die dem Antrieb zugeordnet ist, und/oder über eine separate Steuerungseinheit bedarfsgerecht betätigbar ist. Die Heizung kann zielgerichtet immer dann eingesetzt werden, wenn eine Störung der Schmierstoffpumpe auf Schmierstoffaushärtungen bei tiefen Temperaturen zurückzuführen ist.

Es besteht also die Notwendigkeit, Fördersysteme zur Förderung eines Schmierstoffes so zu betreiben, dass die Lebensdauer der geschmierten Komponenten erhöht wird.

Einige Ausführungsbeispiele der vorliegenden Erfindung ermöglichen dies durch die Verwendung einer Vorrichtung zum Betreiben eines Fördersystems zur Förderung eines Schmierstoffes, die eine Sensorschnittstelle zum Empfangen eines Informationssignales umfasst, welches eine Information über eine Umgebungstemperatur in einer Umgebung des Fördersystems (2) enthält. In Kenntnis der Information über den Zustand des Schmierstoffes kann die Vorrichtung über eine Steuerschnittstelle ein Steuersignal für das Fördersystem ausgeben, das eine von dem Informationssignal abhängige Veränderung einer Fördercharakteristik des Fördersystems bewirkt, wobei das Steuersignal eine Verringerung einer Anzahl von Pumpenhüben der Pumpe (8) bewirkt, wenn die Information über die Umgebungstemperatur eine Verringerung der Umgebungstemperatur anzeigt.

Das heißt, die Vorrichtung kann auf wechselnde Betriebsbedingungen reagieren und entsprechende technische Anpassungen und Änderungen relevanter Betriebsparameter eines Fördersystems zur Förderung eines Schmierstoffes vornehmen. Dadurch kann zum Einen eine Überdimensionierung des Fördersystems mit den sich daraus ergebenden negativen Folgen vermieden werden und zum anderen kann eine Unterversorgung der zu schmierenden Komponenten zuverlässig vermieden werden, wenn eine Information über einen Zustand des Schmierstoffes bei der Einstellung einer Fördercharakteristik des Fördersystems berücksichtigt wird.

Gemäß einigen Ausführungsbeispielen der Erfindung wird eine Information über eine Umgebungstemperatur in einer Umgebung des Fördersystems berücksichtigt. So kann bei einigen speziellen Ausführungsbeispielen der Erfindung beispielsweise mittels eines Steuersignals eine Verringerung einer Anzahl von Pumpenhüben einer Pumpe, die zur Förderung des Schmierstoffes verwendet wird, bewirkt werden, wenn sich die Umgebungstemperatur verringert. Dadurch kann gemäß einigen Ausführungsbeispielen die Fördermenge des Fördersystems ohne aufwändige Volumenstrommesseinrichtungen und komplizierte Regelalgorithmen weitgehend konstant gehalten werden. Gemäß einigen Ausführungsbeispielen kann die Pumpe betriebspunktabhängig, beispielsweise abhängig von der Umgebungstemperatur oder von der Belastung des Antriebs, die Ansaugzeit durch definiertes Anhalten in der Saugstellung anpassen, um diese beispielsweise so lange zu verlängern, bis das gesamte Förderkammervolumen mit Schmierstoff gefüllt ist. So kann dem Medium bzw. dem Schmierstoff die Zeit gegeben werden, die es benötigt, in die Förderkammer nachzuflie-ßen. Dies kann zu einer diskontinuierlichen Förderung führen, was in Folge des Anhaltens des Pumpenmotors während der Zeit des Ansaugens einem schnellen Druckanstieg, wie er bei einer Erhöhung der Viskosität des Schmierstoffes gerade bei tiefen Temperaturen auftreten könnte, entgegenwirken kann. Dies wiederum kann zu einer Vergleichmäßigung des Druckniveaus in der Hauptleitung eines Fördersystems beitragen.

Bei alternativen Ausführungsbeispielen kann die Information über den Zustand des Schmierstoffes ohne zusätzlichen Temperatursensor gewonnen werden. Beispielsweise kann das Informationssignal eine Information über einen Stromverbrauch der zur Förderung des Schmierstoffes verwendeten Pumpe enthalten, welcher ansteigt, wenn das zu fördernde Medium, also der Schmierstoff, der Pumpe einen größeren Widerstand entgegensetzt. Aus demselben Grund, kann das Informationssignal beispielsweise eine Information über eine Drehzahl der Pumpe, über eine von der Pumpe erzeugte Kraft oder über ein von der Pumpe erzeugtes Drehmoment enthalten.

Alternativ dazu kann gemäß einigen Ausführungsbeispielen das Informationssignal eine Information über einen Druck in dem Schmierstoff oder über eine Viskosität des Schmierstoffes enthalten, um so direkt eine Information über die Konsistenz des Schmierstoffes zu liefern, was zu einer Erhöhung der Genauigkeit der Regelung führen kann.

Allgemein gesprochen kann ein Informationssignal, das eine Information über einen Zustand des Schmierstoffes enthält, jedwedes Signal sein, das eine Größe oder eine Eigenschaft beschreibt, die kausal mit dem Zustand des Schmierstoffes verknüpft werden kann.

Gemäß einigen Ausführungsbeispielen wird von dem Steuersignal eine Veränderung eines Betriebszyklusses der Pumpe bewirkt. Dabei kann gemäß einigen Ausführungsbeispielen eine Verringerung der Anzahl von Pumpenhüben der Pumpe pro Zeiteinheit bewirkt werden, um dem Schmierstoff genügend Zeit zu geben, in die Förderkammer der Pumpe nachzufließen. Bei alternativen Ausführungsbeispielen kann der Betriebszyklus der Pumpe jedoch auch erhöht werden, das heißt, die Anzahl der Pumphübe pro Zeiteinheit wird erhöht, um die Nettoförderleistung konstant zu halten oder zu erhöhen.

Gemäß einigen Ausführungsbeispielen kann das Steuersignal auch eine Zumischung eines eine Viskosität des Schmierstoffes verringernden Zusatzstoffes bewirken, um im Falle des Auftretens einer starken Erhöhung der Viskosität und damit einer Verringerung des Volumenstroms dazu beizutragen, die erforderliche Förderleistung aufrecht zu erhalten bzw. wieder zu erlangen.

Bevorzugte Ausführungsbeispiele der vorliegenden Erfindung werden nachfolgend, Bezug nehmend auf die beigefügten Figuren näher erläutert. Es zeigen:
Fig. 1 eine schematische Darstellung eines Fördersystems zum Fördern eines Schmierstoffes mit einem Ausführungsbeispiel einer Vorrichtung zum Betreiben des Fördersystems; und
Fig. 2ein Blockdiagramm eines Ausführungsbeispiels eines Verfahrens zum Betreiben eines Fördersystems zur Förderung eines Schmierstoffes.

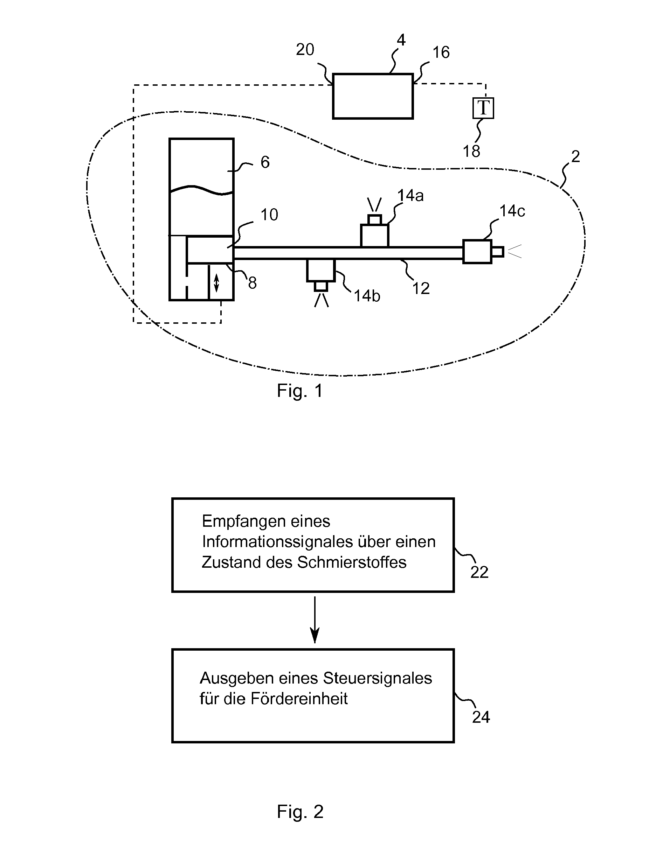

Fig. 1 zeigt in einer schematischen Ansicht ein Beispiel für ein Fördersystem 2 zur Förderung eines Schmierstoffes, sowie eine Vorrichtung 4 zum Betreiben des Fördersystems 2. Das in Fig. 1 exemplarisch dargestellte Fördersystem 2 umfasst ein Reservoir 6 für den Schmierstoff, eine Kolbenpumpe 8, die den Schmierstoff aus dem Reservoir 6 in eine Hauptleitung 12 presst, über welche eine Mehrzahl von Schmiermittelverteilern 14a-c mit Schmierstoff versorgt werden. Um eine quasi kontinuierliche Förderung zu gewährleisten, fließt der Schmierstoff aus dem Reservoir 6 in eine Förderkammer 10, die oberhalb des Kolbens der Kolbenpumpe 8 gebildet ist, von wo aus der Schmierstoff bei einem Förderhub der Kolbenpumpe 8 in die Hauptleitung 12 gepresst wird. Die zur vollständigen Verwirklichung des Verfahrens möglicherweise notwendigen Ventile sind der Einfachheit der Darstellung halber in Fig. 1 nicht gezeigt.

Die Vorrichtung 4 zum Betreiben des Fördersystems 2 weist eine Sensorschnittstelle 16 auf, über die sie ein Informationssignal, das eine Information über einen Zustand des Schmierstoffes enthält, empfangen kann. Vorliegend ist an die Sensorschnittstelle 16 ein Temperatursensor 18 angebunden, so dass die Information eine Information über eine Umgebungstemperatur enthält. Die Vorrichtung 4 weist ferner eine Steuerschnittstelle 20 auf, um ein Steuersignal auszugeben, das eine von dem Informationssignal abhängige Veränderung einer Fördercharakteristik des Fördersystems 2 bewirkt. Zu diesem Zweck ist die Steuerschnittstelle 20 mit der Kolbenpumpe 8 verbunden, um im vorliegenden Ausführungsbeispiel beispielsweise einen Betriebszyklus der Pumpe zu verändern. Beispielsweise kann die Vorrichtung 4 die Dauer verlängern, die der Kolben der Kolbenpumpe 8 in der Position verbleibt, in der ein Nachfließen des Schmierstoffes aus dem Reservoir 6 in die Förderkammer 10 ermöglicht wird, wenn eine Temperatur unter einem vorbestimmten Wert fällt. Dadurch kann beispielsweise erreicht werden, dass auch unter derartigen Umständen bei jedem Kolbenhub das maximal zu fördernde Volumen gefördert werden kann.

Wenngleich in Fig. 1 eine Kolbenpumpe 8 zum Fördern des Schmierstoffes dargestellt ist, versteht es sich von selbst, dass bei alternativen Ausführungsbeispielen beliebige weitere Fördereinrichtungen bzw. Pumpen zur Förderung des Schmierstoffes verwendet werden können. Ferner können selbstverständlich beliebige andere Informationen über einen Zustand des Schmierstoffes verwendet werden, um die situationsabhängige Ansteuerung des Fördersystems 2 zu bewirken.

Auf solche Art erzeugte bzw. ermittelte Informationen lassen sich sowohl mit einem integrierten als auch mit einem externen Steuergerät analysieren, aufbereiten und auswerten. Das heißt mit anderen Worten, die Vorrichtung 4 kann, obwohl sie in Fig. 1 getrennt von der Kolbenpumpe 8 dargestellt ist, auch integraler Teil der Steuerung der Kolbenpumpe 8 oder eines anderen verwendeten Bauteils in dem Fördersystem 2 sein. Die Ergebnisse dieser Auswertung durch die Vorrichtung 4 können dann als Grundlage für die automatisch oder auch nach einer manuellen Bestätigung einzuleitenden Korrekturmaßnahmen bzw. Veränderungen der Fördercharakteristik des Fördersystems 2 verwendet werden. Zusammengefasst wird also ein Fördersystem 2 in die Lage versetzt, auf wechselnde Betriebsbedingungen automatisch zu reagieren und entsprechende technische Anpassungen und Änderungen relevanter Parameter vorzunehmen. Diese können allgemein gesprochen Änderungen physikalischer und/oder chemischer Größen an dem zu fördernden Medium, also an dem Schmierstoff, sein. Ferner können Änderungen an den Umgebungsbedingungen vorgenommen werden. Alternativ oder ergänzend können Änderungen der effektiv nutzbaren Förderkammergröße, der Dreh- und/oder Hubzahl vorgenommen werden.

Fig. 2 zeigt schematisch ein Flussdiagramm eines Ausführungsbeispiels eines Verfahrens zum Betreiben eines Fördersystems zur Förderung eines Schmierstoffes. In einem Empfangsschritt 22 wird ein Informationssignal, das eine Information über einen Zustand des Schmierstoffes enthält, empfangen. In einem Steuerschritt 24 wird ein Steuersignal für die Fördereinheit ausgegeben, das eine von dem Informationssignal abhängige Veränderung einer Fördercharakteristik des Fördersystems bewirkt.

Ausführungsbeispiele der Erfindung können in beliebigen Umgebungen vorteilhaft verwendet werden, wie beispielsweise in Industriehallen, in denen eine Mehrzahl stationärer Maschinen geschmiert werden soll. Besonders Vorteilhaft ist die Anwendung auch bei mobilen Anwendungen wie beispielsweise bei Baufahrzeugen, Kränen, LKW's oder dergleichen, da diese häufig besonders starken Veränderungen der Umgebungsbedingungen ausgesetzt sind.

### Bezugszeichenliste

- 2: Fördersystem
- 4: Vorrichtung
- 6: Reservoir
- 8: Kolbenpumpe
- 10: Förderkammer
- 12: Hauptleitung
- 14a - c: Schmiermittelverteiler
- 16: Sensorschnittstelle
- 18: Temperatursensor
- 20: Steuerschnittstelle
- 22: Empfangsschritt
- 24: Steuerschritt

## Patentansprüche

1. Vorrichtung (4) zum Betreiben eines Fördersystems (2) zur Förderung eines Schmierstoffes, umfassend:
eine Sensorschnittstelle (16) zum Empfangen eines Informationssignales, das eine Information über eine Umgebungstemperatur in einer Umgebung des Fördersystems (2) enthält; und
eine Steuerschnittstelle (20) zum Ausgeben eines Steuersignales für das Fördersystem (2), das eine von dem Informationssignal abhängige Veränderung einer Fördercharakteristik des Fördersystems (2) bewirkt, wobei das Steuersignal eine Verringerung einer Anzahl von Pumpenhüben der Pumpe (8) bewirkt, wenn die Information über die Umgebungstemperatur eine Verringerung der Umgebungstemperatur anzeigt.

2. Vorrichtung (4) nach Anspruch 1 oder 2, bei der das Informationssignal eine Information über einen Stromverbrauch einer zur Förderung des Schmierstoffes verwendeten Pumpe (8), eine Drehzahl der Pumpe (8), eine von der Pumpe (8) erzeugte Kraft oder ein von der Pumpe (8) erzeugtes Drehmoment enthält.

3. Vorrichtung (4) nach einem der vorhergehenden Ansprüche, bei der das Informationssignal eine Information über einen Druck in dem Schmierstoff oder eine Viskosität des Schmierstoffes enthält.

4. Vorrichtung (4) nach einem der vorhergehenden Ansprüche, bei der das Steuersignal eine Veränderung eines Betriebszyklusses der Pumpe (8) oder einer von der Pumpe (8) erzeugten Kraft bewirkt.

5. Vorrichtung (4) nach einem der vorhergehenden Ansprüche, bei der das Steuersignal eine Zumischung eines eine Viskosität des Schmierstoffes verringernden Zusatzstoffes bewirkt.

6. Fördersystem (2) zum Fördern eines Schmierstoffes, umfassend:
Eine Vorrichtung (4) gemäß einem der Ansprüche 1 bis 5; und
Zumindest eine zur Förderung des Schmierstoffes verwendete Pumpe (8).

7. Verfahren zum Betreiben eines Fördersystems (2) zur Förderung eines Schmierstoffes, umfassend:
Empfangen (22) eines Informationssignales, das eine Information über eine Umgebungstemperatur in einer Umgebung des Fördersystems (2) enthält; und
Ausgeben (24) eines Steuersignales für die Fördereinheit (2), das eine von dem Informationssignal abhängige Veränderung einer Fördercharakteristik des Fördersystems (2) bewirkt, wobei das Steuersignal eine Verringerung einer Anzahl von Pumpenhüben der Pumpe (8) bewirkt, wenn die Information über die Umgebungstemperatur eine Verringerung der Umgebungstemperatur anzeigt.

8. Computerprogramm mit einem Programmcode zur Durchführung des Verfahrens nach Anspruch 7, wenn das Programm auf einem Computer abläuft.
